# EUROPEAN PATENT APPLICATION

(11) **EP 4 481 075 A1**
(43) Date of publication of application: **25.12.2024**
(21) Application number: 24158883.9
(22) Date of filing: 21.02.2024
(51) Int. Cl.: C22B 26/12, C22B 1/02, B09B 3/40, C22B 5/12, C22B 7/00, C22B 23/02, H01M 10/54, B09B 101/16

(54) **REDUCED METAL POWDER FOR RECOVERING VALUABLE METAL FROM WASTE LITHIUM ION SECONDARY BATTERY AND METHOD FOR PREPARING THE SAME**

(30) Priority: 23.06.2023 KR 20230081446
(71) Applicant: AK tree Co., Ltd, Seoul 06164 (KR); Libus987 Inc, Houston, TX 77036 (US)
(72) Inventor: AHN, Hyo Soo, 44784 Nam-gu, Ulsan (KR); KIM, Eun Jung, 22009 Yeonsu-gu, Incheon (KR)
(74) Representative: Beck & Rössig European Patent Attorneys

(57) **Abstract**

The present invention provides a reduced metal powder prepared by processing a waste lithium ion secondary battery to recover valuable metals from the waste lithium ion secondary battery in an economical and environmentally friendly manner. To achieve the goal described above, the reduced metal powder according to the invention is prepared by pyrolyzing a waste lithium ion secondary battery, and contains metals Ni and Co and has magnetism.

## Description

### BACKGROUND OF THE INVENTION

### 1. Field of the Invention

The present invention relates to a reduced metal powder for recycling waste lithium ion secondary batteries and a method for preparing the same, and more particularly, to a reduced metal powder containing a high amount of metals nickel and cobalt obtained through low-temperature pyrolysis of waste lithium ion secondary batteries and a method for preparing the same.

### 2. Description of the Related Art

As the automobile industry has transitioned from internal combustion engine vehicles to electric vehicles, Europe and China, the axes of growth in electric vehicles and secondary batteries worldwide, are seeking to expand the supply of electric vehicles and gain competitiveness through carbon dioxide regulations and eco-friendly vehicle roadmaps. Accordingly, the global electric vehicle market is expected to grow rapidly.

The waste battery market is also projected to grow in earnest as electric vehicle batteries are discarded after 5 to 10 years of use in general. Global output of electric vehicle waste batteries is expected to reach around 1.6 million tons by 2030, and many different countries, mainly countries in Europe, are making large-scale investments in developing processes to recover valuable metals from waste batteries.

Unlike reuse, the waste battery recycling industry involves recovering valuable metals from waste batteries and recycling the valuable metals as raw materials, and accordingly, both resolving environmental issues and ensuring a stable supply of valuable resources are achievable.

Waste battery recycling generally involves extracting valuable metals through a process of wet smelting or dry smelting after discharging, dismantling, and crushing, and in particular, the process of dry smelting that is suitable for high-capacity processing and provides a high recovery rate is taking center stage.

The dry smelting involves heating powder obtained after being crushed at a high temperature to incinerate and remove organic compounds and polymer components contained in the crushed powder, and then extracting valuable metals through a wet method.

The process of dry smelting takes a great deal of time and equipment for discharge and undergoes a complicated process afterward, thus making itself less economical, and in the resulting products heated at a high temperature and discharged, valuable metals containing a large amount of impurities and requiring extraction are present in the form of oxides, which makes it inevitable to use strong acids for wet extraction, resulting in environmental issues.

### SUMMARY OF THE INVENTION

The invention intends to provide a reduced metal powder prepared by pyrolyzing a waste lithium ion secondary battery and suitable for recovering valuable metals in an economical and environmentally friendly manner, and a method for preparing the same.

To achieve the goals described above, according to an embodiment of the invention, there is provided a reduced metal powder recovered from a waste lithium ion secondary battery, which is formed by pyrolyzing a waste lithium ion secondary battery, and contains metals Ni and Co and has magnetism.

In addition, the reduced metal powder according to the invention may have a saturation magnetization value of 15 emu/g or greater.

In addition, the reduced metal powder according to the invention may have a saturation magnetization value of 30 emu/g or greater.

In addition, the reduced metal powder according to the invention may have the metals Ni and Co in an amount of 50 wt% or greater.

In addition, the reduced metal powder according to the invention may have an average particle size of 20 µm or less, and have a standard deviation of 10 µm or less in particle size distribution.

In addition, when a molar ratio of the metal Ni to the metal Co in the reduced metal powder according to the invention (M_{Ni}/M_{Co}, where M_{Ni} and M_{Co} are respectively a mole fraction of the metal Ni and a mole fraction of the metal Co in the reduced metal powder) is a first molar ratio (M₁), and a molar ratio of Ni to Co in a positive electrode material of the waste lithium ion secondary battery before pyrolysis (m_{Ni}/m_{Co}, where mₙᵢ and m_{Co} are respectively a mole fraction of Ni and a mole fraction of Co in the positive electrode material) is a second molar ratio (M₂), a difference between the first molar ratio and the second molar ratio may be 10% or less of the second molar ratio.

In addition, the reduced metal powder according to the invention may be formed as the pyrolysis is performed by heating the waste lithium ion battery at a temperature of 400 °C or less to induce self-heating.

In addition, the reduced metal powder according to the invention may not contain metal ions other than Li, Ni, Co, Mn, and Al, and may not contain anions of F- and Cl-.

Meanwhile, according to an embodiment of the invention, there is provided a metal compound prepared by wet extracting the reduced metal powder according to the invention as sulfide, nitride, or chloride containing nickel or cobalt.

According to an embodiment of the invention, there is provided a method for recycling a waste lithium ion secondary battery, which includes (a) charging a waste lithium ion secondary battery into a pyrolysis furnace, (b) increasing an internal temperature of the pyrolysis furnace while stirring the waste lithium ion secondary battery to induce self-heating of the waste lithium ion secondary battery, (c) continuing the self-heating reaction of the waste lithium ion secondary battery, (d) discharging a first powder prepared after the self-heating reaction of the waste lithium ion secondary battery is completed, and (e) magnetically separating the first powder into a second powder that is driven by a magnetic force and a third powder that is not driven by a magnetic force, wherein the second powder may be the reduced metal powder according to the invention described above.

In addition, in the step (a) of the method according to the invention, the waste lithium ion secondary battery may be in a state that is not discharged.

In addition, in the step (b) of the method according to the invention, the internal temperature may be 400 °C or less.

In addition, in the step (c) of the method according to the invention, the pyrolysis furnace may not be heated.

In addition, the step (c) of the method according to the invention may last for 10 to 24 hours.

In addition, the step (c) of the method according to the invention may be performed in an inert gas atmosphere.

### BRIEF DESCRIPTION OF THE DRAWINGS

Fig. 1 is a scanning electron microscope image of a reduced metal powder according to the invention;
Fig. 2 is a graph showing the results of measuring particle size distribution of a reduced metal powder according to the invention;
Fig. 3 is a graph showing the results of measuring saturation magnetization values of a reduced metal powder according to the invention;
Fig. 4 shows the results of X-ray diffraction analysis of a reduced metal powder according to the invention;
Fig. 5 is a transmission electron microscope image and diffraction pattern analysis results of a reduced metal powder according to the invention; and
Fig. 6 is a transmission electron microscope image and diffraction pattern analysis results of a reduced metal powder according to the invention.

### DETAILED DESCRIPTION OF THE EXEMPLARY EMBODIMENTS

Embodiments of the invention will be described in detail with reference to the accompanying drawings to the extent that those skilled in the art may readily practice. However, the invention may be embodied in many different forms and should not be construed as limited to the embodiments set forth herein.

Throughout the description, when an element "includes" a component, it may indicate that the element does not exclude another component unless explicitly described to the contrary, but can further include another component.

The terms "about", substantially", and the like used throughout the description indicates that when a natural manufacturing and a substance allowable error are suggested, such an allowable error corresponds the value or is similar to the value, and such values are intended for the sake of clear understanding of the invention or to prevent an unconscious infringer from illegally using the disclosure of the invention. In addition, through the description, the terms "step wherein" or "step of" does not indicate "step for".

Through the description, the term "combination thereof' included in an expression of a Markush form means a mixture or combination of one or more elements selected from the group consisting of the elements in the expression of the Markush form, and thereby means that at least one selected from a group consisting of the elements is included.

Throughout the description, the description of "A and/or B" indicates "A or B, or A and B."

In a typical recycling process for extracting valuable metals from waste lithium ion secondary batteries, pyrolysis powder was obtained through high-temperature pyrolysis and crushing processes, and valuable metals were extracted from valuable metal oxides contained in the pyrolysis powder.

The pyrolysis powder obtained through this typical method contained impurities such as carbon and current collector materials in addition to valuable metal oxides due to the nature of the high-temperature pyrolysis process and thus the extraction rate of valuable metals that were obtainable from the entire powder was low and the extraction resulted from oxides, thereby requiring the use of strong acids.

In comparison, the reduced metal powder according to the invention is prepared by pyrolyzing waste lithium ion secondary batteries, and contains metals Ni and Co and has magnetism. In the present description, the waste lithium ion secondary batteries include secondary batteries discarded after use, and secondary battery scrap discarded due to defects caused during the manufacturing process as well.

As described above, the reduced metal powder resulting from the typical high-temperature pyrolysis is inevitably produced in an oxide form as metal ions combine with oxygen, and contains a great deal of impurities. However, the reduced metal powder according to the invention contains metals Ni and Co and thus has magnetism, enabling magnetic separation and preventing the use of strong acids that are harmful to the environment even in wet extraction.

Pyrolysis of waste lithium ion batteries to prepare the reduced metal powder according to the invention may be performed by heating the waste lithium ion batteries at a low temperature of 400 °C or less to induce self-heating of the waste lithium ion batteries themselves.

An exothermic reaction of a positive electrode material and an electrolyte contained in the waste lithium ion secondary batteries may begin even at relatively low temperatures, and accordingly, self-heating of the waste lithium ion secondary batteries may be induced even by low-temperature heating. The heating temperature is preferably as low as possible along with self-heating for the benefit of process energy consumption and metal production, and thus the heating temperature is 400 °C or less, preferably 300 °C or less, more preferably 200 °C or less.

This low-temperature pyrolysis process allows Ni and Co to be present as metals in the reduced metal powder according to the invention. Carbon of a negative electrode material contained in the waste lithium ion batteries and carbon components contained in a separator, an electrolyte, and the like during the low-temperature pyrolysis process serve as a reducing agent for metal oxides during the pyrolysis process, thereby reducing Ni and Co contained in the form of oxides in the positive electrode material of the waste lithium ion secondary batteries to metal. In addition, the heating for pyrolysis is performed at a low temperature, and thus the temperature of the entire reaction is low, and accordingly, the reduced Ni and Co are not oxidized again and are present in the state of metal.

In addition, in the typical pyrolysis powder that is pyrolyzed at high temperature, impurities such as Cu from a negative electrode current collector, Fe from a case, and Si, and Ca from a refractory material are mixed into the pyrolysis powder. However, such impurities may not be mixed into the reduced metal powder according to the invention due to low-temperature pyrolysis. Therefore, the reduced metal powder according to the invention does not contain metal ions other than Li, Ni, Co, Mn, and Al that may be obtained from the positive electrode material and the positive electrode current collector. In addition, the reduced metal powder according to the invention is not subjected to wet treatment, and may thus not contain anions such as F⁻ and Cl⁻.

The reduced metal powder prepared in this way may contain a high proportion of Ni and Co in the state of metal due to the low-temperature pyrolysis, and in the reduced metal powder according to the invention, the sum of metals Ni and Co may be 50 wt% or greater, preferably 70 wt% or greater.

Meanwhile, the reduced metal powder according to the invention has magnetism and may has a saturation magnetization value of 15 emu/g or greater, more preferably 30 emu/g or greater.

The high amount of metals Ni and Co contained in the reduced metal powder according to the invention are ferromagnetic materials and thus the metals Ni and Co have a high level of saturation magnetization value, and some residual carbon, manganese oxide, and the like that do not have magnetism contribute to lowering the saturation magnetization value. The reduced metal powder according to the invention contains residues in a low amount other than Ni and Co, and thus has a relatively high saturation magnetization value, preferably 15 emu/g or greater, and more preferably 30 emu/g or greater.

In addition, the reduced metal powder according to the invention may have an average particle size of 20 µm or less, and have a standard deviation of 10 µm or less in particle size distribution.

In the typical high-temperature pyrolysis process, the resulting product is agglomerated after the process due to the high temperature, requiring a crushing process to powder the product. However, the reduced metal powder according to the invention is obtained through a pyrolysis process at low temperature, and thus has a small particle size, indicating no need of an additional crushing process.

In addition, the smaller the particle size of the powder for recycling waste lithium ion batteries, the more favorable it is to extract valuable metals through post-processing. Accordingly, the reduced metal powder according to the invention preferably has an average particle size of 20 µm or less. In addition, with a uniform standard deviation of 10 µm or less in particle size distribution, handling the powder becomes easier.

Meanwhile, the metals Ni and Co contained in the reduced metal powder according to the invention are from Ni and Co contained in a positive electrode material of waste lithium ion secondary batteries. Therefore, a ratio of Ni and Co depends on a ratio of the positive electrode material of waste lithium ion secondary batteries before pyrolysis. The reduced metal powder according to the invention has a very high recovery rate of Ni and Co from waste lithium ion secondary batteries, and accordingly, the ratio of Ni and Co in the waste lithium ion secondary batteries before pyrolysis does not show a big difference from the ratio of Ni and Co in the reduced metal powder after pyrolysis.

Accordingly, when a molar ratio of the metal Ni to the metal Co in the reduced metal powder according to the invention (M_{Ni}/M_{Co}, where M_{Ni} and M_{Co} are respectively a mole fraction of the metal Ni and a mole fraction of the metal Co in the reduced metal powder) is a first molar ratio (M₁), and a molar ratio of Ni to Co in the positive electrode material of waste lithium ion secondary batteries before pyrolysis (m_{Ni}/m_{Co}, where mₙᵢ and m_{Co} are respectively a mole fraction of Ni and a mole fraction of Co in the positive electrode material) is a second molar ratio (M₂), a difference between the first molar ratio and the second molar ratio may be 10% or less, more preferably 5% or less of the second molar ratio.

Meanwhile, the valuable metals nickel and cobalt in the reduced metal powder according to the invention are in a metallic state, and may thus be easily extracted even by mild acid treatment compared to oxides. Therefore, sulfide, nitride, or chloride containing nickel or cobalt may be effectively obtained by wet extracting the reduced metal powder according to the invention. These metal compounds may be used again as raw materials for positive electrode materials for lithium ion secondary batteries.

A method for preparing the reduced metal powder according to the invention includes (a) charging a waste lithium ion secondary battery into a pyrolysis furnace, (b) increasing an internal temperature of the pyrolysis furnace while stirring the waste lithium ion secondary battery to induce self-heating of the waste lithium ion secondary battery, (c) halting the heating of the pyrolysis furnace and continuing the self-heating reaction of the waste lithium ion secondary battery, (d) discharging a first powder prepared after the self-heating reaction of the waste lithium ion secondary battery is completed, and (e) magnetically separating the first powder into a second powder that is driven by a magnetic force and a third powder that is not driven by a magnetic force, and the second powder may be the reduced metal powder according to the invention described above.

As described above, the reduced metal powder according to the invention is preformed through heating at low temperature to induce self-heating and pyrolysis resulting therefrom. The powder obtained after completing pyrolysis may be discharged from the pyrolysis furnace and magnetically separated to obtain the reduced metal powder according to the invention containing Ni and Co as metal components.

In this case, the waste lithium ion secondary battery may be put into the pyrolysis furnace while not being discharged, and this undischarged waste lithium ion secondary battery may easily generate self-heating even when heated at a low temperature, resulting in pyrolysis.

In particular, as there is no need for discharge treatment, unlike typical pyrolysis methods, devices and processes for discharge are not required, which may greatly reduce process costs.

In addition, in a method for recycling waste lithium ion batteries according to the invention, heating for pyrolysis is available even at 400 °C or lower, and thus energy costs for pyrolysis may also be reduced. The heating for pyrolysis may also be performed at a temperature of 300 °C or less, and may be 200 °C or less.

After self-heating begins after heating, halting artificial heating of the pyrolysis furnace and continuing self-heating reaction of waste lithium ion secondary batteries may be performed. This reaction may last for 10 to 24 hours. When the reaction time is too short, it is highly likely that impurities are generated due to the rapid reaction, and when the reaction time is too long, process productivity falls, which is not desirable. This reaction time may be controlled by regulating the internal temperature and atmosphere in the pyrolysis furnace in the steps (b) and (c).

After the self-heating is done, the pyrolysis reaction may take place in an inert gas atmosphere, and nitrogen, argon, and the like may be used as the inert gas.

Hereinafter, analysis results of the reduced metal powder according to the invention will be described with reference to the drawings.

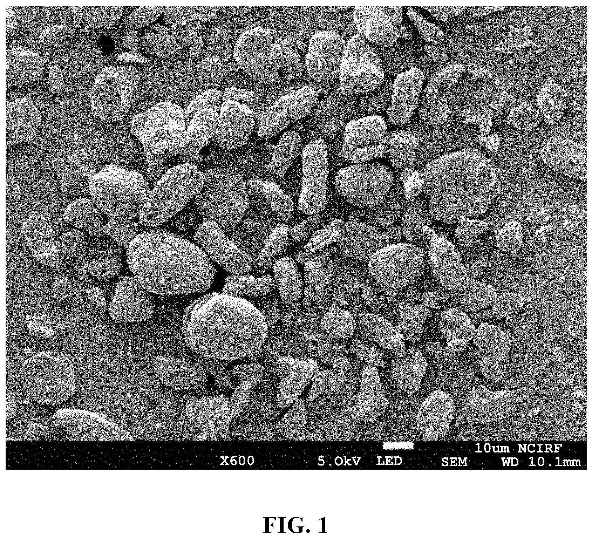

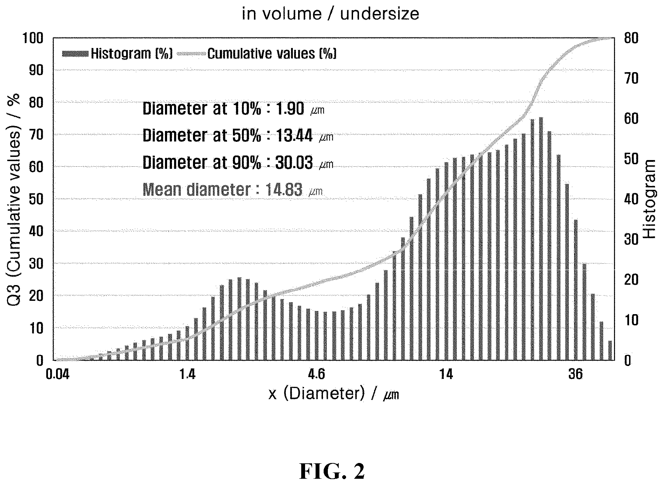

Fig. 1 is a scanning electron microscope image of the reduced metal powder according to the invention, and Fig. 2 is the results of measuring a particle size of the reduced metal powder. The reduced metal powder was generally a spherical powder, had an average particle size of 14.8 µm, and the distribution was not wide.

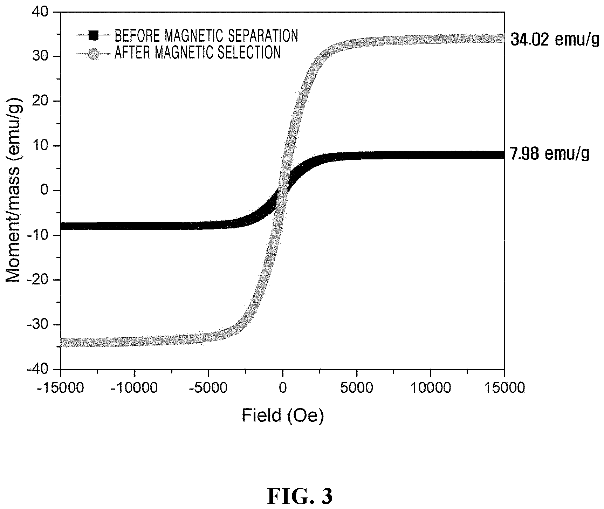

Fig. 3 is a graph showing the results of measuring saturation magnetization values of the reduced metal powder before and after magnetic separation of reactants discharged after a reaction was completed in a pyrolysis furnace.

It was observed that the saturation magnetization value of the powder (i.e., the reduced metal powder according to the invention) after magnetic separation significantly increased compared to the powder before magnetic separation. The powder after magnetic selection becomes the reduced metal powder according to the invention and contains a high amount of metals Ni and metal Co, and thus has a high saturation magnetization value (34.02 emu/g).

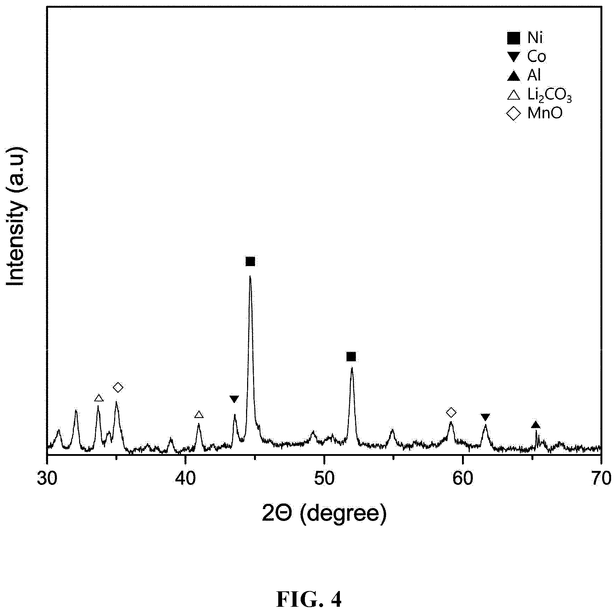

Fig. 4 is a graph showing the results of X-ray diffraction analysis of the reduced metal powder according to the invention. It was found that the peaks of metal Ni (fcc structure) and metal Co (hep structure) appeared the strongest and thus the metals Ni and Co were contained in a high amount. In addition, lithium carbonate (Ll₂CO₃), MnO, Al, and the like were detected.

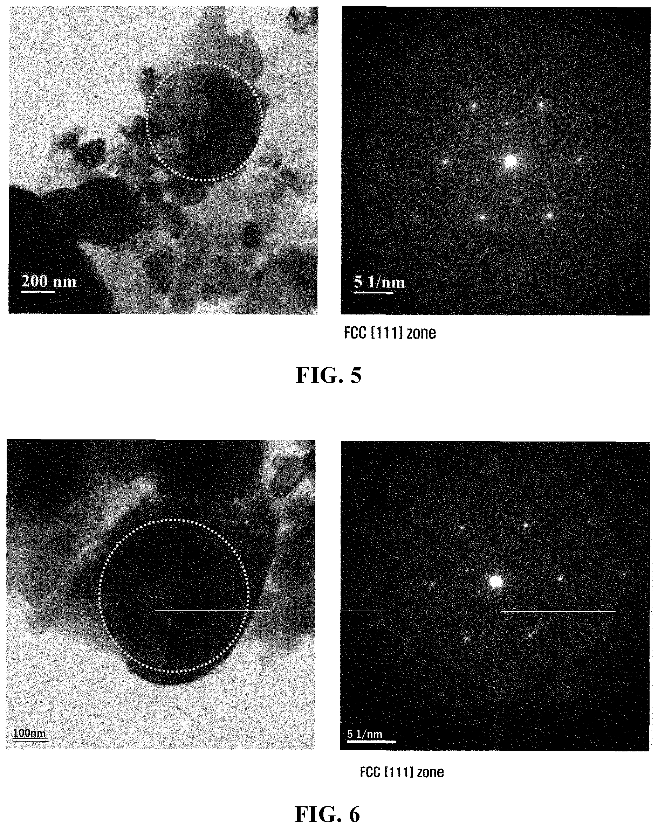

Figs. 5 and 6 show transmission electron microscope images and diffraction pattern analysis results of the reduced metal powder according to the invention. In the diffraction pattern, metal Ni having an fcc structure was observed, as shown in the XRD results in Fig. 4.

A reduced metal powder prepared by pyrolyzing a waste lithium ion secondary battery according to the invention allows recovery of valuable metals in an economical and environmentally friendly manner.

## Claims

1. A reduced metal powder recovered from a waste lithium ion secondary battery, the reduced metal powder prepared by pyrolyzing a waste lithium ion secondary battery, and containing metals Ni and Co and having magnetism.

2. The reduced metal powder according to Claim 1, wherein the reduced metal powder has a saturation magnetization value of 15 emu/g or greater.

3. The reduced metal powder according to Claim 1 or 2, wherein the reduced metal powder has a saturation magnetization value of 30 emu/g or greater.

4. The reduced metal powder according to one of Claims 1 to 3, wherein the metals Ni and Co are in an amount of 50 wt% or greater.

5. The reduced metal powder according to one of Claims 1 to 4, wherein the reduced metal powder has an average particle size of 20 µm or less, and has a standard deviation of 10 µm or less in particle size distribution.

6. The reduced metal powder according to one of Claims 1 to 5, wherein when a molar ratio of the metal Ni to the metal Co in the reduced metal powder (M_{Ni}/M_{Co}, where M_{Ni} and M_{Co} are respectively a mole fraction of the metal Ni and a mole fraction of the metal Co in the reduced metal powder) is a first molar ratio (M₁), and a molar ratio of Ni to Co in a positive electrode material of the waste lithium ion secondary battery before pyrolysis (m_{Ni}/m_{Co}, where mₙᵢ and m_{Co} are respectively a mole fraction of Ni and a mole fraction of Co in the positive electrode material) is a second molar ratio (M₂), a difference between the first molar ratio and the second molar ratio is 10% or less of the second molar ratio.

7. The reduced metal powder according to one of Claims 1 to 6, wherein the pyrolysis is performed by heating the waste lithium ion battery at a temperature of 400 °C or less to induce self-heating.

8. The reduced metal powder according to one of Claims 1 to 6, wherein the reduced metal powder does not contain metal ions other than Li, Ni, Co, Mn, and Al, and does not contain anions of F⁻ and Cl⁻.

9. A metal compound prepared by wet extracting the reduced metal powder according to any one of Claims 1 to 8 as sulfide, nitride, or chloride containing nickel or cobalt.

10. A method for recycling a waste lithium ion secondary battery, the method comprising:
(a) charging a waste lithium ion secondary battery into a pyrolysis furnace;
(b) increasing an internal temperature of the pyrolysis furnace while stirring the waste lithium ion secondary battery to induce self-heating of the waste lithium ion secondary battery;
(c) continuing the self-heating reaction of the waste lithium ion secondary battery;
(d) discharging a first powder prepared after the self-heating reaction of the waste lithium ion secondary battery is completed; and
(e) magnetically separating the first powder into a second powder that is driven by a magnetic force and a third powder that is not driven by a magnetic force,
wherein the second powder is the reduced metal powder according to any one of Claims 1 to 8.

11. The method according to Claim 10, wherein in the step (a), the waste lithium ion secondary battery is in a state that is not discharged.

12. The method according to Claim 10 or 11, wherein in the step (b), the internal temperature is 400 °C or less.

13. The method according to one of Claims 10 to 12, wherein in the step (c), the pyrolysis furnace is not heated.

14. The method according to one of Claim 10 to 13, wherein the step (c) lasts for 10 to 24 hours.

15. The method according to one of Claims 10 to 14, wherein the step (c) is performed in an inert gas atmosphere.
